# EUROPÄISCHE PATENTSCHRIFT

(11) **EP 0 532 092 B1**
(45) Veröffentlichungstag und Bekanntmachung des Hinweises auf die Patenterteilung: **28.08.1996**
(21) Anmeldenummer: 92202665.3
(22) Anmeldetag: 03.09.1992
(51) Int. Cl.: G11B 15/467, G11B 15/43, G11B 15/48, G11B 15/02

(54) **Vorrichtung zur Steuerung und Regelung eines Magnetbandgerätes**
Device for controlling and regulating a magnetic tape apparatus
Dispositif de commande et de régulation d'un appareil à bande magnétique

(30) Priorität: 06.09.1991 DE 4129593
(43) Veröffentlichungstag der Anmeldung: 17.03.1993
(73) Patentinhaber: BTS BROADCAST TELEVISION SYSTEMS GMBH, D-64347 Griesheim (DE); Philips Electronics N.V., 5621 BA Eindhoven (NL)
(72) Erfinder: Eisenberg, Gerd, NL-6101 Rossdorf (DE); Laurentius, Werner, W-6110 Gross-Zimmern (DE); Schilling, Horst, W-6103 Griesheim (DE)
(74) Vertreter: von Laue, Hanns-Ulrich, Dipl.-Ing.

(56) Entgegenhaltungen:
- EP-A- 0 131 316
- EP-A- 0 236 588
- DE-A- 3 324 482
- US-A- 4 536 806
- US-A- 4 794 472
- SMPTE JOURNAL vol. 92, no. 12, December 1983, SCARSDALE, NY US pages 1274 - 1279 HIROSHI TANIMURA 'A second generation type-c one-inch VTR'
- SMPTE JOURNAL vol. 93, no. 2, February 1984, SCARSDALE, NY US pages 149 - 154 GLEN ROSE 'Diagnostics for a microprocessor-based videotape recorder'
- FERNSEH UND KINO TECHNIK vol. 40, no. 4, April 1986, BERLIN DE pages 147 - 150 KAREL HLAVICA 'Aufbau und Funktion eines neuen mikroprozessortgesteuerten DC-Capstan-Antriebs'

## Beschreibung

Die Erfindung geht aus von einer Vorrichtung zur Steuerung und Regelung eines Magnetbandgerätes mit einem Kopfrad-Servo zur Regelung der Drehzahl- und Phasenlage eines Kopfrades einer rotierenden Abtasteinrichtung, einem Capstan-Servo zur Regelung der Transportgeschwindigkeit eines Magnetbandes, einem ersten Bandwickel-Servo zur Regelung der Bandzugspannung an einer Abwickelspule des Magnetbandes, einem zweiten Bandwickel-Servo zur Regelung der Bandzugspannung an einer Aufwickelspule des Magnetbandes sowie einer mikroprozessorgesteuerten Einrichtung zur Steuerung und Regelung der Servos.

Eine derartige Vorrichtung ist in der EP 0 091 188 B1 beschrieben. Bei der bekannten Vorrichtung steuert ein einziger Mikroprozessor eine Vielzahl von Servos in ihrer Regelbetriebsart. Die Regelbetriebsart hängt im wesentlich von der über ein Bedienpult eingegebenen Gerätefunktion ab, d.h. ob ein normaler Wiedergabebetrieb, ein Zeitlupen- oder Zeitrafferbetrieb oder eine schneller Bandvorlauf- bzw. Bandrücklauf-Betrieb angewählt ist. Darüber hinaus hat der Mikroprozessor regelungstechnische Aufgaben für die verschiedenen Servos zu erfüllen, wie z.B. für einen Kopfradservo Steuersignale zur Festlegung der Drehgeschwindigkeit und Phasenlage des Drehkörpers einer rotierenden Abtasteinrichtung zu erzeugen, für einen Capstan-Servo andere Steuersignale zur Stabilisierung der Bandlängsgeschwindigkeit und für einen Bandwickelservo wieder andere Steuersignale zum Konstanthalten des Bandzuges des Magnetbandes. Die Steuersignale werden von dem Mikroprozessor in Form von Digitalwerten abgegeben. Einige der Digitalwerte werden mit zugeordneten D/A-Wandlern in entsprechende analoge Steuersignale umgewandelt. Andere Digitalwerte können nicht direkt A/D-gewandelt werden, weil entweder die Auflösung der von dem Mikroprozessor abgegebenen Digitalwerte unzureichend ist oder die erforderliche Zeit zur Berechnung der Digitalwerte nicht zur Verfügung steht. Diesen einzelnen Servos sind daher schnelle Zusatzschaltungen zugeordnet, um Regelungenauigkeiten aufgrund der fehlenden Auflösung bzw. durch die zu geringe Rechengeschwindigkeit des Mikroprozessors zu kompensieren.

Aus der Zeitschrift SMPTE JOURNAL, Band 92, Nr. 12, Dezember 1983, SCARSDALE, NY US, Seiten 1274 - 1279, ist ein Magnetbandgerät mit zwei Mikroprozessoren bekannt. Der Servo-Betrieb zwischen den Prozessoren ist geteilt. Der eine Mikroprozessor (hard CPU) wirkt auf die verdrahtete Ein/Ausgabe-Steuerung ein, während der andere Mikroprozessor (host CPU) die Servo-Systemsteuerung bedient, die Servo-Daten bearbeitet und die externe Überwachung des Systems übernimmt. Die beiden Mikroprozessoren arbeiten unabhängig von einander und verrichten ihre jeweiligen Funktionen gleichzeitig. Die Haupt-Servos, wie der Trommel-Servo und der Capstan-Servo, enthalten auch in diesem Fall Zusatzschaltungen, beispielsweise Phasendetektoren, um die unzureichende Datenverarbeitungsgeschwindigkeit jenes Mikroprozessors (host CPU), der für die Steuerung des Servossystems und der Bearbeitung der Servo-Daten vorgesehen ist, auszugleichen.

Der vorliegenden Erfindung liegt die Aufgabe zugrunde, eine Vorrichtung nach der eingangs genannten Art weiterzubilden, damit der Aufwand für Zusatzschaltungen reduziert werden kann.

Diese Aufgabe wird dadurch gelöst, daß der mikroprozessorgesteuerten Einrichtung zur Steuerung und Regelung der Servos ein erster und ein zweiter Mikroprozessor zugeordnet ist, wobei der erste Mikroprozessor eine bestimmte Regelbetriebsart für die einzelnen Servos vorgibt und den jeweiligen Betriebszustand der einzelnen Servos überwacht, und wobei der zweite Mikroprozessor entsprechend der von dem ersten Mikroprozessor vorgegebenen Regelbetriebsart anhand von den Servos zugeordneten Regelgrößen digitale Stellgrößen zur Regelung der einzelnen Servos berechnet.

Die erfindungsgemäße Vorrichtung hat den Vorteil, daß Steuerungsaufgaben, die die Überwachung und Diagnose der einzelnen Regelkreise betreffen, von einem übergeordneten ersten Mikroprozessor (Master) übernommen werden. Die die eigentliche Regelung betreffenden Aufgaben werden von einem untergeordneten zweiten Mikroprozessor (Slave) erledigt. Durch dieses hierarchische Steuerungskonzept wird der zweite Mikroprozessor von nicht die Reglung betreffenden zeitaufwendigen Rechenarbeiten freigehalten, so daß bei gegebener Rechengeschwindigkeit die die Regelung betreffenden Regel-Algorithmen präzise in der vorgegebenen Zeit abgearbeitet werden können.

Durch die in den Unteransprüchen aufgeführten Maßnahmen sind vorteilhafte Weiterbildungen und Verbesserungen der im Patentanspruch 1 angegebenen Vorrichtung möglich. Besonders vorteilhaft ist, daß bei Anwendung der erfindungsgemäßen Vorrichtung nur ein einziger D/A-Wandler benötigt wird, um analoge Stellspannungen für die verschiedenen Servos abzuleiten. Außerdem können diese analogen Stellspannungen unmittelbar Verstärkerendstufen der Servomotoren zuleitet werden.

Ein Ausführungsbeispiel der Erfindung ist in der Zeichnung dargestellt und in der nachfolgenden Beschreibung näher erläutert. Es zeigen:
- Fig. 1: ein Blockschaltbild zur Erläuterung des Band- und Kopfradantriebs nach dem Stand der Technik und
- Fig. 2: ein Blockschaltbild zur Erläuterung der erfindungsgemäßen Vorrichtung.

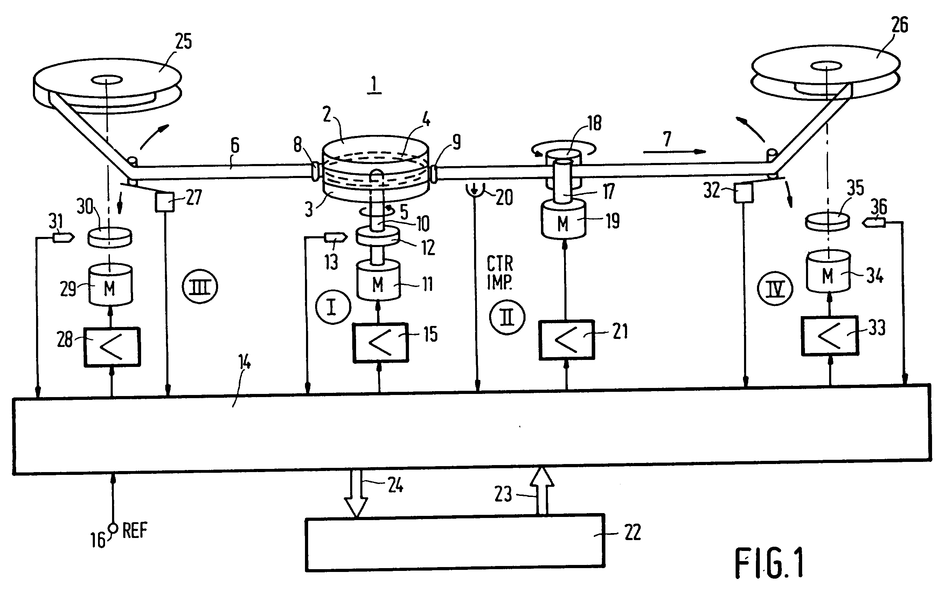

In der Fig. 1 bezeichnet 1 eine rotierende Abtasteinrichtung mit einer feststehenden Obertrommel 2 und einer feststehenden Untertrommel 3. Konzentrisch zu den Trommeln 2 und 3 rotiert in einer Teilungsfuge 4 eine (nicht dargestellte) Kopfradscheibe in Richtung eines Pfeiles 5. Am Umfang dieser Kopfradscheibe sind in an sich bekannter Weise Aufzeichnungs/Wiedergabe-Magnetköpfe befestigt, die ein wendelförmig um die Abtasteinrichtung 1 geschlungenes Magnetband 6 abtasten. Die Führung des Magnetbandes 6 in Richtung eines Pfeiles 7 übernehmen zwei Führungselemente 8 und 9. Die Kopfradscheibe wird über eine Antriebswelle 10 von einem Kopfradmotor 11 in Drehung versetzt. Die Antriebswelle 10 trägt eine Tachoscheibe 12 zur Feststellung der Drehphase mittels eines auf die Tachoscheibe 12 gerichteten Sensors 13.

Zur Drehzahl- und Phasenregelung eines Kopfradservos I wird das mit dem Sensor 13 von der Tachoscheibe 12 abgenommene Tachosignal einer Laufwerk-Steuerung/Regelung 14 zugeführt, die in Form eines Soll/Ist-Vergleichs eine Stellspannung für eine Kopfrad-Verstärkerendstufe 15 erzeugt, in welcher das Stellsignal entsprechend verstärkt wird, um den nachgeschalteten Kopfradmotor 11 nachzuführen. Das zum Soll/Ist-Vergleich benötigte Ist-Signal wird von einem an einer Klemme 16 der Laufwerk-Steuerung/Regelung zugeführten Referenzsignal abgeleitet.

Der Vorschubgeschwindigkeit des Magnetbandes 6 in Richtung des Pfeiles 7 bestimmt eine mit dem Magnetband 6 in Eingriff stehende Capstanwelle 17, gegen die über eine Andruckrolle 18 das Magnetband 6 drückt wird. Die Capstanwelle 17 wird von einem Capstan-Motor 19 angetrieben. In einem Wiedergabebetrieb wird die Vorschubgeschwindigkeit dadurch ermittelt, daß mit einem Magnetkopf 20 eine auf dem Magnetband 6 aufgezeichnete Steuerspur gelesen wird. Die von der Steuerspur gelesenen Steuerspurimpulse werden der Laufwerk-Steuerung/Regelung 14 zugeführt, damit in einem weiteren Soll/Ist-Vergleich eine Stellspannung für die Capstan-Verstärkerendstufe 21 abgeleitet werden kann, die ihrerseits Drehzahl und Drehrichtung des Capstan-Motors 19 bestimmt.

Die Vorschubgeschwindigkeit und die Vorschubrichtung des Magnetbandes 6 gibt eine Bedienperson des Magnetbandgerätes vor, in dem z.B. durch Druck auf eine bestimmte, auf einem Bedienpult 22 angeordnete Taste eine bestimmte Wiedergabe- oder Aufnahmebetriebsart angewählt wird. Das Bedienpult 22 ist über einen Datenbus 23 mit der Laufwerk-Steuerung/Regelung 14 verbunden, so daß die gewählte Betriebsart in Form von Befehlen und Daten übertragen werden kann. Umgekehrt liefert die Laufwerk-Steuerung/Regelung 14 über einen weiteren Datenbus 24 Daten an das Bedienpult 22, um die aktuelle Einstellung des Laufwerks zu quittieren. Die Abfrage und Steuerung des Bedienpultes 23 erfolgt üblicherweise prozessorgesteuert. Diese Prozessorsteuerung ist unabhängig von der der einzelnen Servos.

Neben dem Kopfrad-Servo I und dem Capstan-Servo II weist das Magnetbandgerät zwei Bandwickelservos III und IV zur Regelung der Bandzugspannung an einer Abwickelspule 25 und an einer Aufwickelspule 26 auf. Der an der Abwickelspule 25 vorliegende Bandzug wird mit einem Bandzugfühlhebel 27 gemessen. Der Bandzugfühlhebel 27 besteht aus einem schwenkbaren Fühlhebelarm, an dessen einem Ende eine Rolle befestigt ist, die mit dem Magnetband 6 in Eingriff steht. Das andere Ende des schwenkbaren Fühlhebelarms wird mit einem Sensor abgetastet, um ein entsprechend der jeweiligen Auslenkung des Fühlhebelarms entsprechendes Bandzugsignal abzuleiten. Anordnungen zum Messen der Bandzugspannung eines Magnetbandes sind an sich bekannt (EP 0 186 591 A2). Das von dem Bandzugefühlhebel 27 erzeugte Bandzugsignal (Ist-Wert) wird in der Laufwerk-Steuerung/Regelung 14 mit einem Bandzug-Sollwert verglichen. Entsprechend der Abweichung gibt die Laufwerk-Steuerung/Regelung 14 ein Stellsignal an eine Wickel-Verstärkerendstufe 28 ab, die das Drehmoment eines mit der Abwickelspule 25 drehfest gekoppelten Wickelmotors 29 steuert. Die jeweilige Drehrichtung und Achsposition des Wickelmotors 29 wird durch Abtastung einer Tachoscheibe 30 mit Sensorelementen 31 bestimmt. Die Tachoscheibe 30 ist starr mit der Achse des Wickelmotors 29 gekoppelt. Die von den Sensorelementen 31 abgegebenen Tachoimpulse werden in der Laufwerk-Steuerung/Regelung 14 ausgewertet, um beispielsweise die Wickeldurchmesser der Bandwickel 25 und 26 zu berechnen oder auch irreguläre Betriebszustände, wie z.B. das Vorliegen einer Bandlose, zu ermitteln.

Der Bandwickelservo IV zur Regelung der Bandzugspannung an der Aufwickelspule 26 entspricht dem für die Abwickelspule 25. Auch hier wird wieder mit einem Bandzugfühlhebel 32 der vorliegende Ist-Wert der Bandzugspannung gemessen und in der Laufwerk-Steuerung/Regelung 14 mit einem vorgegebenen Sollwert der Bandzugspannung verglichen. Die abgeleitete Stellspannung wird in einer Wickel-Verstärkerendstufe 33 verstärkt und zu einem Wickelmotor 34 weitergeleitet. Die Drehrichtung und Achsposition des Wickelmotors 34 wird mit einer Tachoscheibe 35 und zugehörigen Sensorelementen 36 bestimmt.

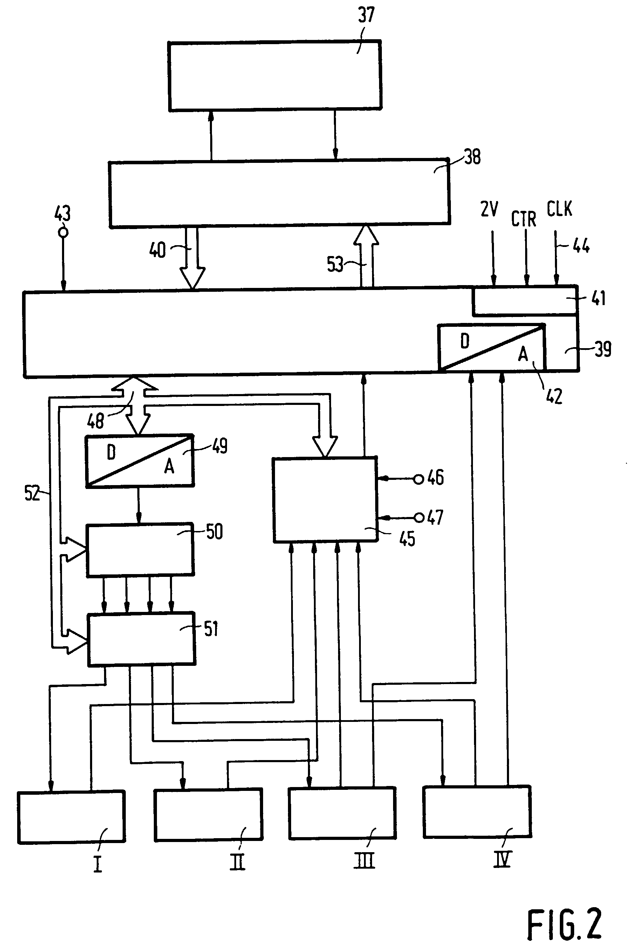

Die Fig. 2 zeigt ein Blockschaltbild der in der Fig. 1 angegebenen Laufwerk-Steuerung/Regelung 14. Darin ist mit 37 die Systemsteuerung des Magnetbandgerätes bezeichnet, die auch das Bedienpult 22 einschließt. Darüber hinaus schließt die Systemsteuerung 37 auch Steuerungen und Regelungen ein, die nicht direkt den Kopfradservo I, den Capstanservo II, Abwickelservo III und Aufwickelservo IV betreffen. Je nachdem, welche Betriebsfunktion die Bedienperson über das Bedienpult 22 angewählt worden ist, werden von der Systemsteuerung 37 bestimmte Daten und Befehle zu einem ersten Mikroprozessor 38 übertragen. Dieser erste Mikroprozessor 38 hat eine überwachende Funktion: Er überwacht z.B. die Schaltungen und Sensoren der Servos I bis IV. Außerdem werden Daten, die in einem zweiten untergeordneten Mikroprozessor 39 anfallen und zur Berechnung von Stellgrößen erforderlich sind, überwacht. Weiterhin überwacht der erste Mikroprozessor 38 die einzelnen Servos I bis IV hinsichtlich ihrer Funktion, d.h. ob die von dem zweiten untergeordneten Mikroprozessor 39 berechneten Stellgrößen anhand gemessener Regelgrößen hinsichtlich ihres Wertebereiches plausibel sind, d.h. gültige Daten darstellen oder nicht. Ferner berechnet der erste Mikroprozessor 38 die in einer Magnetbandkassette vorliegende Bandposition, um die verbleibende Spielzeit zu ermitteln oder um im Fall eines schnellen Vor- oder Rücklaufs des Magnetbandes 6 eine Begrenzung der Wickelgeschwindigkeit am Bandanfang bzw. Bandende durch den zweiten Mikroprozessor 39 zu veranlassen. Darüber hinaus gibt der erste übergeordnete Mikroprozessor 38 die Regelkreisbetriebsart der einzelnen Servos I bis IV vor, z.B. ob der Kopfradservo I mit oder ohne Phasenregler betrieben werden soll.

Schließlich gibt der erste Mikroprozessor 38 die Bandgeschwindigkeit als Funktion der Zeit vor, um z.B. im Fall eines Wechsels von schnellem Vorlauf auf Stop keine abrupte, sondern eine allmähliche, rampenförmige Änderung der Wickelgeschwindigkeit des Magnetbandes 6 durch die beiden Wickelservos III und IV zu veranlassen.

Die von dem ersten Mikroprozessor 38 abgegebenen Befehle und Daten werden über einen Datenbus 40 dem zweiten untergeordneten Mikroprozessor 39 zugeführt. Dieser zweite untergeordnete Mikroprozessor 39 vom Typ 80C196 weist intern einen Zeitgeber 41 und einen A/D-Wandler 42 auf. Getaktet wird der zweite Mikroprozessor 39 durch ein an einer Klemme 43 liegendes 8-MHz-Taktsignal. Zur Synchronisierung des zweiten Mikroprozessors 39 werden dem Zeitgeber 41 des zweiten Mikroprozessors 39 bei 44 mehrere Referenzsignale zugeführt, z.B. ein Vertikalsynchronsignal 2V, ein Steuerspursignal CTR und ein Taktsignal CLK. Die in Zusammenhang mit der Fig. 1 beschriebenen Bandzugsignale der Bandzugfühlhebel 27 und 32 werden von den Wikkelservos III und IV Eingängen des internen A/D-Wandlers 42 zugeführt. Die von den Sensoren 13, 31 und 36 abgegebenen Tachoimpulse (Fig. 1) wandelt ein Zeitgeber 45 in entsprechende Digitalwerte um; entsprechendes gilt auch für die von dem Steuerspurkopf 20 abgegebenen Steuerspurimpulse CTR. Zur Steuerung wird dem Zeitgeber 45 als Referenz ein 9-MHz-Taktsignal (Klemme 46) und ein 300-Hz-Signal (Klemme 47) zugeführt.

Der Zeitgeber 45 besteht aus einer Reihe von Gattern und Zählern, die die Anzahl von Taktimpulsen zwischen aufeinanderfolgenden Tacho- bzw. Steuerspurimpulsen zählen. Beim Vorliegen eines Zählergebnisses (Ist-Wert) gibt der Zeitgeber 45 ein Interrupt-Signal an den zweiten Mikroprozessor 39 ab, so daß die ermittelten Zählergebnisse als 8 Bit breite Datenworte von dem zweiten Mikroprozessor 39 übernommen werden können. Der zweite Mikroprozessor 39 berechnet aufgrund der Digitalwerte der ermittelten Ist-Werte und den von dem ersten übergeordneten Mikroprozessor 38 vorgegebenen Sollwerten nach bestimmten Regelalgorithmen ein den einzelnen Kopfradservos zugeordneten digitalen Stellwert. Von einer 16 Bit breiten Schnittstelle des Mikroprozessors 39 gelangen die berechneten digitale Stellwerte - wortalternierend hinsichtlich der einzelnen Servos I bis IV - über einen bidirektionalen Datenbus 48 zu Eingängen eines D/A-Wandlers 49, der die anliegenden digitalen Stellwerte in entsprechende analoge Stellwerte umwandelt. Die am Ausgang des D/A-Wandlers 49 liegenden analogen Stellwerte werden nachfolgend in einem Demultiplexer 50 auf 4 Kanäle aufgeteilt und nach einer entsprechenden Zwischenspeicherung in einer Abtast- und Halteschaltung 51 den entsprechend zugeordneten Servos 38 bis 41 zugeleitet. Der Demultiplexer 50 und die Abtast- und Halteschaltung 51 werden von digitalen Signalen eines 4 Bit breiten Datenbus 52 gesteuert, der von dem 16 Bit breiten Datenbus 48 abzweigt.

Der zweite untergeordnete Mikroprozessor 39 berechnet für die Servos I bis IV nur die relevanten Einstellwerte, wobei die Verstärkung, Zeitkonstanten sowie gesetzte Teilerfaktoren in dem Zeitgeber 45 berücksichtigt werden. Da bei den Wickelservos III und IV auch die Massen der Bandwickel in das Regelverhalten eingehen, wird der Wickeldurchmesser der Abwickelspule 25 und der Aufwickelspule 26 ermittelt, um das Regelverhalten entsprechend anzupassen. Der Wickeldurchmesser der Wickel 25 und 26 wird anhand der von den Sensoren 31 und 36 abgegebenen Impulssignale berechnet. In die Bandzugregelung der beiden Wickelmotoren 29 und 34 ist eine Drehzahlbegrenzung der Wickelmotoren 29 und 34 eingebunden, um ein Zerreißen des Magnetbandes 6 bei irregulären Betriebszuständen, wie einem Festkleben des Magnetbandes 6 an einem der Bandführungselemente aufgrund erhöhter Luftfeuchtigkeit, zu verhindern. Weiterhin übernimmt der zweite Mikroprozessor 39 die Berechnung digitaler Stellgrößen zur Geschwindigkeits- und Phasenregelung des Kopfrades.

Eine getrennte Berechnung des Geschwindigkeitswertes und des Phasenwertes - entsprechend dem eingangs genannten Stand der Technik - ist in der erfindungsgemäßen Vorrichtung nicht erforderlich. Ferner werden in dem zweiten untergeordneten Mikroprozessor 39 digitale Stellwerte zur Geschwindigkeitsregelung des Magnetbandes 6 in Längsrichtung durch den Capstanservo II berechnet. Dabei können zur Phasenregelung verschiedene Referenzsignale steuerspurmäßig berücksichtigt werden, z.B. 8-V-Synchronsignale, 2-V-Synchronsignale und 300-Hz-Steuerspur-Referenzsignale.

Die von dem Zeitgeber 45 erzeugten und von dem zweiten untergeordneten Mikroprozessor 39 ausgewerteten Werte der Regelsignale werden über einen Bus 53 auch dem ersten übergeordneten Mikroprozessor 38 zur Überwachung und Diagnose zugeleitet. Über den Bus 53 gelangen ferner Meßdaten über die jeweilige Auslenkung der Bandzughebel. Wie eingangs erwähnt, werden diese Daten jedoch nur dazu verwendet, um den Betriebszustand des Magnetbandgerätes zu überwachen und um entsprechende Vorgaben für den zweiten untergeordneten Mikroprozessor abzuleiten, und nicht etwa digitale Stellwerte.

In dem vorliegenden Ausführungsbeispiel sind die Aufzeichnungs/Wiedergabe-Magnetköpfe am Umfang eines rotierenden Kopfrades befestigt. Selbstverständlich ist es auch möglich, anstelle eines rotiertenden Kopfrades eine rotierende (Ober)-Trommel, die die Aufzeichnungs/Wiedergabe-Magnetköpfe trägt, zur Abtastung des Magnetbandes 6 zu verwenden. In diesem Fall wird die (Ober)-Trommel von dem Motor 11 angetrieben.

## Patentansprüche

1. Vorrichtung zur Steuerung und Regelung eines Magnetbandgerätes mit
einem Kopfrad-Servo zur Regelung der Drehzahl- und Phasenlage eines Kopfrades einer rotierenden Abtasteinrichtung,
einem Capstan-Servo zur Regelung der Transportgeschwindigkeit eines Magnetbandes,
einem ersten Bandwickel-Servo zur Regelung der Bandzugspannung an einer Abwickelspule des Magnetbandes,
einem zweiten Bandwickel-Servo zur Regelung der Bandzugspannung an einer Aufwickelspule des Magnetbandes sowie
einer mikroprozessorgesteuerten Einrichtung zur Steuerung und Regelung der Servos, **dadurch gekennzeichnet,**
daß der mikroprozessorgesteuerten Einrichtung zur Steuerung und Regelung der Servos ein erster und ein zweiter Mikroprozessor (38, 39) zugeordnet ist, wobei der erste Mikroprozessor (38) eine bestimmte Regelbetriebsart für die einzelnen Servos (I bis IV) vorgibt und den jeweiligen Betriebszustand der einzelnen Servos (I bis IV) überwacht, und wobei der zweite Mikroprozessor (39) entsprechend der von dem ersten Mikroprozessor (38) vorgegebenen Regelbetriebsart anhand von den Servos (I bis IV) zugeordneten Regelgrößen digitale Stellgrößen zur Regelung der einzelnen Servos (I bis IV) berechnet.

2. Vorrichtung nach Anspruch 1, dadurch gekennzeichnet, daß die einzelnen Servos (I bis IV) an Übergängen von einer bestimmten Regelbetriebsart zu einer anderen bestimmten Regelbetriebsart von dem ersten Mikroprozessor (38) derart gesteuert werden, daß eine stoßfreie Anpassung an die geänderte Regelbetriebsart erfolgt.

3. Vorrichtung nach Anspruch 2, dadurch gekennzeichnet, daß bei einer Änderung der Vorgabe für den Capstan-Servo (II) die bisherige Transportgeschwindigkeit des Magnetbandes (6) rampenförmig an eine neue Transportgeschwindigkeit angepaßt wird.

4. Vorrichtung nach Anspruch 1, dadurch gekennzeichnet, daß der erste Mikroprozessor (38) eingerichtet ist zum Berechnen der auf dem Magnetband (6) verbleibende Spielzeit aus den Digitalwerten der Tachosignale, die von Tachogeneratoren der Motoren (29, 34) zum Antrieb der Auf- und Abwickelspule (25, 26) erzeugt werden.

5. Vorrichtung nach Anspruch 4, dadurch gekennzeichnet, daß der erste Mikroprozessor (38) zur Begrenzung der Bandgeschwindigkeit an einem Anfang und an einem Ende des Magnetbandes (6) eingerichtet ist zum Veranlassen einer Sollwertvorgabe an den zweiten Mikroprozessor (39).

6. Vorrichtung nach Anspruch 1, dadurch gekennzeichnet, daß der erste Mikroprozessor eingerichtet ist zum Überwachen der Signale in den einzelnen Servos (I bis IV).

7. Vorrichtung nach Anspruch 1, dadurch gekennzeichnet, daß der zweite Mikroprozessor (39)eingerichtet ist zum Berechnen von Digitalwerten von Stellgrößen für die einzelnen Servos (I bis IV) aufgrund von Regelgrößen der einzelnen Servos (I bis IV),
- daß ein D/A Umsetzer vorgesehen ist zum Umwandeln der berechneten Digitalwerte in analoge Stellgroßen, und
- daß die erhaltenen analogen Stellgrößen Stellglieder (11, 15; 19, 21; 28, 29; 33, 34) der einzelnen Servos (I bis IV) steuern.

8. Vorrichtung nach Anspruch 7, dadurch gekennzeichnet, daß die Stellglieder (11, 15; 19, 21; 28, 29; 33, 34) der einzelnen Servos (I bis IV) Motor-Verstärkerendstufen (15, 21, 28, 33) umfassen, zum Ansteuern der Motoren (11, 19, 29, 34).

9. Vorrichtung nach Anspruch 1, dadurch gekennzeichnet, daß der zweite Mikroprozessor (39) eingerichtet ist zum Berechnen von Einstellwerten für die Servos (I bis IV).

10. Vorrichtung nach Anspruch 1, dadurch gekennzeichnet, daß der zweite Mikroprozessor (39) eingerichtet ist zum Berechnen von
- Digitalwerten eines Stellsignals zur Geschwindigkeits- und Phasenregelung des Kopfradservos (I),
- Digitalwerten eines Stellsignals zur Geschwindigkeitsregelung des Capstan-Servos (II) und
- Digitalwerten eines Stellsignals zur Bandzugregelung des Abwickelservos (III) und Aufwickelservos (IV).

## Claims

1. A device for operating and controlling a magnetic-tape apparatus, comprising
a head-disc servo for controlling the speed and phase of a head disc of a rotary scanning device,
a capstan servo for controlling the transport speed of a magnetic tape,
a first tape winding servo for controlling the tape tension at a supply reel of the magnetic tape,
a second tape winding servo for controlling the tape tension at a take-up reel of the magnetic tape, and
a microprocessor-controlled device for operating and controlling the servos,
characterized in that
the microprocessor-controlled device for operating and controlling the servos comprises a first and a second microprocessor (38, 39), the first microprocessor (38) setting a given control mode for the individual servos (I to IV) and monitoring the instantaneous operational state of the individual servos (I to IV), and in dependence upon the control mode set by the first microprocessor (38) the second microprocessor (39), on the basis of control parameters assigned to the servos (I to IV), computes digital control parameters for controlling the individual servos (I to IV).

2. A device as claimed in Claim 1, characterized in that in the case of changes from one given control mode to another given control mode the individual servos (I to IV) are controlled by the first microprocessor (38) so as to obtain a smooth adaptation to the changed control mode.

3. A device as claimed in Claim 2, characterized in that upon a change of the preset parameters for the capstan servo (II) the current transport speed of the magnetic tape (6) is adapted to a new transport speed in a ramp-like fashion.

4. A device as claimed in Claim 1, characterized in that the first microprocessor (38) is adapted to calculate the residual playing time on the magnetic tape (6) from the tacho signals produced by tacho generators of the motors (29, 34) for driving the supply and take-up reels (25, 26).

5. A device as claimed in Claim 4, characterized in that, in order to limit the tape speed at a beginning and at an end of the magnetic tape (6), the first microprocessor (38) is adapted to initiate desired-value presetting at the second microprocessor (39).

6. A device as claimed in Claim 1, characterized in that the first microprocessor is adapted to monitor signals in the individual servos (I to IV).

7. A device as claimed in Claim 1, characterized in that the second microprocessor (39) is adapted to calculate digital values of control parameters for the individual servos (I to IV) on the basis of control parameters of the individual servos (I to IV),
- there has been provided a D/A converter for converting the calculated digital values into analog control parameters, and
- the resulting analog control parameters control control members (11, 15; 19, 21; 28, 29; 33, 34) of the individual servos (I to IV).

8. An apparatus as claimed in Claim 7, characterized in that the control members (11, 15; 19, 21; 28, 29; 33, 34) of the individual servos (I to IV) include motor amplifier output stages (15, 21, 28, 33) for driving the motors (11, 19, 29, 34).

9. A device as claimed in Claim 1, characterized in that the second microprocessor (39) is adapted to calculate setpoint values for the servos (I to IV).

10. An apparatus as claimed in Claim 1, characterized in that the second microprocessor (39) is adapted to calculate
- digital values of a control signal for speed and phase control of the head disc servo (I),
- digital values of a control signal for speed control of the capstan servo (II), and
- digital values of a control signal for tape tension control of the supply-reel winding servo (III) and the take-up winding servo (IV).

## Revendications

1. Dispositif de commande et de réglage d'un magnétophone à cassette avec
- un servomécanisme des têtes pour le réglage de la vitesse de rotation et de la position de phase d'un disque à têtes d'un dispositif de balayage rotatif;
- un servomécanisme de cabestan pour le réglage de la vitesse de transport d'une bande magnétique;
- un premier servomécanisme de bobinage de bande pour le réglage de la tension de la bande à hauteur d'une bobine débitrice de la bande magnétique;
- un deuxième servomécanisme de bobinage de bande pour le réglage de la tension de la bande à hauteur d'une bobine réceptrice de la bande magnétique, ainsi
- qu'un dispositif commandé par microprocesseur pour la commande et le réglage du servomécanisme, caractérisé en ce
qu'au dispositif commandé par microprocesseur en vue de la commande et du réglage du servomécanisme sont affectés un premier et un deuxième microprocesseur (38, 39), le premier microprocesseur (38) définissant un type de réglage déterminé pour les différents servomécanismes (I à IV) et contrôlant l'état de fonctionnement respectif des servomécanismes individuels (I à IV) et le deuxième microprocesseur (39) calculant en fonction du type de réglage prédéterminé par le premier microprocesseur (38) des grandeurs de réglage numériques en vue du réglage des servomécanismes individuels (I à IV) à l'aide des grandeurs de réglage affectées aux servomécanismes (I à IV).

2. Dispositif selon la revendication 1, caractérisé en ce que les différents servomécanismes (I à IV) sont commandés au passage d'un type de réglage déterminé à un autre type de réglage déterminé par le premier microprocesseur (38), de telle sorte que l'adaptation au type de réglage modifié se déroule en souplesse.

3. Dispositif selon la revendication 2, caractérisé en ce qu'en cas de modification de la valeur prédéterminée pour le servomécanisme de cabestan (II), la vitesse de transport de la bande magnétique (6) jusqu'à présent est adaptée en souplesse à une nouvelle vitesse de transport.

4. Dispositif selon la revendication 1, caractérisé en ce que le premier microprocesseur (38) est prévu pour le calcul du temps de lecture résiduel sur la bande magnétique (6) à partir des valeurs numériques des signaux tachymétriques qui sont produits par les générateurs tachymétriques des moteurs (29, 34) en vue de l'entraînement des bobines débitrice et réceptrice (25, 26).

5. Dispositif selon la revendication 4, caractérisé en ce que le premier microprocesseur (38) est prévu pour la limitation de la vitesse de la bande à une entrée et à une sortie de la bande magnétique (6) pour amener une valeur de consigne prédéterminée au deuxième microprocesseur (39).

6. Dispositif selon la revendication 1, caractérisé en ce que le premier microprocesseur est prévu pour le contrôle des signaux dans les différents servomécanismes (I à IV).

7. Dispositif selon la revendication 1, caractérisé en ce que le deuxième microprocesseur (39) est prévu pour le calcul des valeurs numériques des grandeurs de réglage pour les servomécanismes individuels (I à IV) à partir des grandeurs de réglage des servomécanismes individuels (I à IV),
- en ce qu'un convertisseur N/A est prévu pour la conversion des valeurs numériques calculées en grandeurs de réglage analogiques, et
- en ce que les grandeurs de réglage analogiques obtenues commandent des circuits de réglage (11, 15; 19, 21; 28; 29; 33, 34) des servomécanismes individuels (I à IV).

8. Dispositif selon la revendication 7, caractérisé en ce que les circuits de réglage (11, 15; 19, 21; 28, 29; 33, 34) des servomécanismes individuels (I à IV) comprennent des étages finaux amplificateurs de moteur (15, 21, 28, 33) pour commander les moteurs (11, 19, 28, 34).

9. Dispositif selon la revendication 1, caractérisé en ce que le deuxième microprocesseur (39) est prévu pour le calcul des valeurs de réglage pour les servomécanismes (I à IV).

10. Dispositif selon la revendication 1, caractérisé en ce que le deuxième microprocesseur (39) est prévu pour le calcul de
- valeurs numériques d'un signal de réglage en vue du réglage de la vitesse et de la phase du servomécanisme des têtes (I),
- valeurs numériques d'un signal de réglage pour le réglage de la vitesse du servomécanisme de cabestan (II), et
- valeurs numériques d'un signal de réglage pour le réglage de la tension de la bande du servomécanisme débiteur (III) et du servomécanisme récepteur (IV).
